(19) Europäisches Patentamt
European Patent Office
Office européen des brevets

(11) **EP 3 276 574 A1**

(12) **EUROPEAN PATENT APPLICATION**
published in accordance with Art. 153(4) EPC

(43) Date of publication:
**31.01.2018 Bulletin 2018/05**

(51) Int Cl.:
***G06T 7/20*** *(2017.01)*

(21) Application number: **16782490.3**

(22) Date of filing: **04.03.2016**

(86) International application number:
**PCT/CN2016/075670**

(87) International publication number:
**WO 2016/169342 (27.10.2016 Gazette 2016/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.04.2015 CN 201510188040**

(71) Applicant: **ZTE Corporation**
**Shenzhen, Guangdong 518057 (CN)**

(72) Inventors:
• **CHEN, Wenjie**
**Shenzhen**
**Guangdong 518057 (CN)**
• **JIA, Xia**
**Shenzhen**
**Guangdong 518057 (CN)**
• **LIU, Ming**
**Shenzhen**
**Guangdong 518057 (CN)**

(74) Representative: **Regimbeau**
**20, rue de Chazelles**
**75847 Paris Cedex 17 (FR)**

(54) **TARGET TRACKING METHOD AND DEVICE**

(57) A target tracking method and device are provided. The method includes: determining a vertical projection integral image and a horizontal projection integral image of a first region in a current frame of image captured; calculating a vertical projection curve and a horizontal projection curve of a target image in the current frame of image by utilizing the vertical projection integral image and the horizontal projection integral image of the first region; calculating a similarity between the target image in the current frame of image and the target image in a previous frame of image according to the vertical projection curve and the horizontal projection curve; and determining whether the target image in the current frame of image is a target image to be tracked according to the similarity.

Determine a vertical projection integral image and a horizontal projection integral image of a first region in a current frame of image captured — S101

Calculate a vertical projection curve and a horizontal projection curve of the target image in the current frame of image by utilizing the vertical projection integral image and the horizontal projection integral image of the first region — S102

Calculate a similarity between the target image in the current frame of image and the target image in the previous frame of image according to the vertical projection curve and the horizontal projection curve — S103

Determine whether the target image in the current frame of image is the target image to be tracked according to the similarity — S104

**FIG. 1**

EP 3 276 574 A1

**Description**

**TECHNICAL FIELD**

The present disclosure relates to, but is not limited to, the field of target tracking and, in particular, relates to a target tracking method and device.

**BACKGROUND**

Filter tracking frameworks commonly used in a video target tracking system include Kalman filtering and particle filtering. Compared with Kalman filtering, particle filtering is based on Monte Carlo methods in terms of concepts, which uses a particle set to represent probabilities and is applicable to a state space model in any form. A core idea of particle filtering is to express a distribution via random state particles extracted from a posterior probability. Particle filtering is a sequential importance sampling method. A probability distribution in such algorithm is just an approximation of a real distribution, but due to a nonparametric feature, particle filtering gets rid of a restriction caused by a situation where a random quantity must satisfy a Gaussian distribution when a nonlinear filtering problem is to be solved, can express a wider distribution than a Gaussian model, and has a stronger modeling ability for nonlinear properties of variable parameters. Therefore, particle filtering can accurately express the posterior probability distribution based on an observed quantity and a controlled quantity. Because of superiority in a nonlinear and non-Gaussian system, particle filtering has a variety of applications. Matching features commonly used in particle filtering are color-based features, texture-based features or a combination of the above two. However, the accuracy of tracking drops dramatically or even drifts when the two types of features are used in a situation that a background area near a target has similar colors or textures. In other words, tracking features commonly used in the particle filtering framework in the video target tracking system are a color distribution or a texture distribution, but the accuracy of tracking becomes poor when the target and an environment surrounding the target are similar in both color and texture.

A block-matching feature has a high accuracy in matching, but each pixel needs to be calculated during each matching, causing a high time complexity that is inapplicable to a real-time system.

A traditional projection curve feature calculates a pixel value of each pixel and thus has an almost same accuracy as the block-matching algorithm when a target is only translated. However, this algorithm has two major problems. One is that each pixel value is statistically calculated to obtain a new projection curve before each matching. So calculation complexity of this algorithm is equivalent to the block-matching algorithm. That is, the traditional projection curve matching algorithm has a high accuracy but involves a large calculation amount during target matching. The other is that this algorithm is sensitive to scaling of the target. The accuracy of tracking drops dramatically when the moving target is scaled up or down. That is, the traditional projection curve matching algorithm can only deal with translation and cannot deal with scaling during target matching.

At present, some target tracking algorithms can achieve real-time effects in some scenarios and are applicable to scenarios with smaller targets. However, when switched to other scenarios, e.g., scenarios with larger targets, real-time performance may drop or the real-time process even fails to be done.

**SUMMARY**

The following is a summary of a subject described herein in detail. This summary is not intended to limit the scope of the claims.

Embodiments of the present disclosure provide a target tracking method and device capable of better solving the above problems, such as the large calculation amount, the poor real-time performance, etc. during target tracking.

In the target tracking method, a vertical projection integral image and a horizontal projection integral image of a first region in a current frame of image captured are determined. The first region refers to a region is obtained through expanding a circumscribed rectangle of a target image in a previous frame of image by a predetermined ratio. A vertical projection curve and a horizontal projection curve of the target image in the current frame of image are calculated by utilizing the vertical projection integral image and the horizontal projection integral image of the first region. A similarity between the target image in the current frame of image and the target image in the previous frame of image is calculated according to the vertical projection curve and the horizontal projection curve. It is determined whether the target image in the current frame of image is the target image to be tracked according to the similarity.

Optionally, the vertical projection integral image and the horizontal projection integral image of the first region in the current frame of image are determined as follows. For any pixel in the vertical projection integral image of the first region, if the pixel is located in a first row in the vertical projection integral image, it is determined that a pixel value of the pixel is the pixel value of the pixel in the current frame of image. If the pixel is not located in the first row, it is determined that the pixel value of the pixel is the pixel value of the pixel in the current frame of image plus the pixel value of another pixel in a same column and a previous row in the vertical projection integral image. For any pixel in the horizontal projection integral image of the first region, if the pixel is located in a first column in the horizontal projection integral image, it is determined that the pixel value of the pixel is the pixel value of the pixel in the current frame of image. If the pixel is not located in the first column, it is determined that the pixel value of the pixel is the pixel value of the pixel in the current frame of image plus the pixel value of another pixel in a same row and a previous column in the horizontal projection integral image.

Optionally, in the method, if there exists no previous frame of image, the vertical projection integral image and the horizontal projection integral image of the target image in the current frame of image are calculated according to the current frame of image. The vertical projection curve and the horizontal projection curve of the target image in the current frame of image are calculated by utilizing the vertical projection integral image and the horizontal projection integral image of the target image in the current frame of image.

Optionally, the vertical projection curve and the horizontal projection curve of the target image in the current frame of image are calculated by utilizing the vertical projection integral image and the horizontal projection integral image of the first region as follows.

For the vertical projection curve of the target image in the current frame of image, it is determined that an ordinate of the vertical projection curve is a difference between the pixel value of a last row and the pixel value of a first row of a target region to be matched in the vertical projection integral image.

For the horizontal projection curve of the target image in the current frame of image, it is determined that an ordinate of the horizontal projection curve is a difference between the pixel value of a last column and the pixel value of a first column the target region to be matched in the horizontal projection integral image.

Optionally, the similarity between the target image in the current frame of image and the target image in the previous frame of image is calculated according to the vertical projection curve and the horizontal projection curve as follows.

A total number of partitions of the vertical projection curve and the horizontal projection curve is adjusted according to a frame rate of a plurality of frames of images being processed in real time.

The similarity between the target image in the current frame of image and the target image in the previous frame of image is calculated according to the vertical projection curve, the horizontal projection curve and the total number of partitions.

Optionally, the total number of partitions of the vertical projection curve and the horizontal projection curve is adjusted according to the frame rate of the plurality of frames of images being processed in real time as follows.

A statistics is performed on the frame rate of a plurality of frames of images being processed in real time.

The frame rate is compared with a first preset frame rate and a second preset frame rate.

The total number of partitions is reduced if the frame rate is less than the first preset frame rate.

The total number of partitions is increased if the frame rate is greater than the second preset frame rate.

The first preset frame rate is less than the second preset frame rate.

Optionally, before the total number of partitions of the vertical projection curve and the horizontal projection curve is adjusted according to the frame rate of the plurality of frames of images being processed in real time, the method further includes:

not adjusting the total number of partitions if a total number of frames of the images being processed in real time is less than a preset number of frames.

Optionally, the similarity between the target image in the current frame of image and the target image in the previous frame of image is calculated according to the vertical projection curve, the horizontal projection curve and the total number of partitions as follows.

The vertical projection curve and the horizontal projection curve of the current frame of image are partitioned according to the total number of partitions of the vertical projection curve and the horizontal projection curve.

The target image in the current frame of image is matched with the target image in the previous frame according to a result of the partitioning. A particle similarity between the target image in the current frame of image and the target image in the previous frame is calculated according to a formula below:

$$Similarity = \sum_{n=1}^{N} |pV_1(n) - pV_2(n)| + \sum_{n=1}^{N} |pH_1(n) - pH_2(n)|$$

N denotes the total number of partitions; $pV_1(n)$ denotes an nth feature of the vertical projection curve of the target image in the current frame of image and $pV_2(n)$ denotes an nth feature of a vertical projection curve of the target image in the previous frame of image; and $pH_1(n)$ denotes an nth feature of the horizontal projection curve of the target image in the current frame of image and $pH_2(n)$ denotes an nth feature of a horizontal projection curve of the target image in the previous frame of image.

The nth feature of the vertical projection curve is calculated by dividing a cumulative value of the ordinate of an nth partition of the vertical projection curve being partitioned by the cumulative value of the ordinate of each partition of the vertical projection curve being partitioned. The nth feature of the horizontal projection curve is calculated by dividing the cumulative value of the ordinate of an nth partition of the horizontal projection curve being partitioned by the cumulative value of the ordinate of each partition of the horizontal projection curve being partitioned.

An adaptive target tracking device includes:

a vertical and horizontal projection integral image calculation module configured to determine a vertical projection integral image and a horizontal projection integral image of a first region in a current frame of image captured;

a vertical and horizontal projection curve calculation module configured to calculate a vertical projection curve and a horizontal projection curve of a target image in the current frame of image by utilizing the vertical projection integral image and the horizontal projection integral image of the first region;

a similarity calculation module configured to calculate a similarity between the target image in the current frame of image and the target image in a previous frame of image according to the vertical projection curve and the horizontal projection curve; and

a target tracking module configured to determine whether the target image in the current frame of image is the target image to be tracked according to the similarity.

Optionally, the vertical and horizontal projection integral image calculation module is configured to determine the vertical projection integral image and the horizontal projection integral image of the first region in the current frame of image as follows.

For any pixel in the vertical projection integral image of the first region, if the pixel is located in a first row in the vertical projection integral image, it is determined that a pixel value of the pixel is the pixel value of the pixel in the current frame of image. If the pixel is not located in the first row, it is determined that the pixel value of the pixel is the pixel value of the pixel in the current frame of image plus the pixel value of another pixel in a same column and a previous row in the vertical projection integral image.

For any pixel in the horizontal projection integral image of the first region, if the pixel is located in a first column in the horizontal projection integral image, it is determined that the pixel value of the pixel is the pixel value of the pixel in the current frame of image. If the pixel is not located in the first column, it is determined that the pixel value of the pixel is the pixel value of the pixel in the current frame of image plus the pixel value of another pixel in a same row and a previous column in the horizontal projection integral image.

Optionally, the vertical and horizontal projection curve calculation module is configured to calculate, by utilizing the vertical projection integral image and the horizontal projection integral image of the first region, the vertical projection curve and the horizontal projection curve of the target image in the current frame of image as follows.

For the vertical projection curve of the target image in the current frame of image, it is determined that an ordinate of the vertical projection curve is a difference between a pixel value of a last row and a pixel value of a first row of a target region to be matched in the vertical projection integral image.

For the horizontal projection curve of the target image in the current frame of image, it is determined that the ordinate of the horizontal projection curve is a difference between a pixel value of a last column and a pixel value of a first column a target region to be matched in the horizontal projection integral image.

Optionally, the similarity calculation module includes:

a complexity adaptive calculation submodule configured to adjust a total number of partitions of the vertical projection curve and the horizontal projection curve according to a frame rate of a plurality of frames of images being processed in real time; and

a curve feature matching submodule configured to calculate the similarity between the target image in the current frame of image and the target image in the previous frame of image according to the vertical projection curve, the horizontal projection curve and the total number of partitions.

Optionally, the complexity adaptive calculation submodule is configured to adjust the total number of partitions of the vertical projection curve and the horizontal projection curve according to the frame rate of the plurality of frames of images being processed in real time as follows.

A statistics is performed on the frame rate of the plurality of frames of images being processed in real time. The frame rate is compared with a first preset frame rate and a second preset frame rate. The total number of partitions is reduced if the frame rate is less than the first preset frame rate and the total number of partitions is increased if the frame rate is greater than the second preset frame rate.

The first preset frame rate is less than the second preset frame rate.

Optionally, the curve feature matching submodule is configured to calculate the similarity between the target image in the current frame of image and the target image in the previous frame of image according to the vertical projection curve, the horizontal projection curve and the total number of partitions as follows.

The vertical projection curve and the horizontal projection curve of the current frame of image are partitioned according to the total number of partitions of the vertical projection curve and the horizontal projection curve. The target image in the current frame of image is matched with the target image in the previous frame according to a result of the partitioning. A particle similarity between the target image in the current frame of image and the target image in the previous frame is calculated according to a formula below:

$$\text{Similarity} = \sum_{n=1}^{N}|pV_1(n) - pV_2(n)| + \sum_{n=1}^{N}|pH_1(n) - pH_2(n)|$$

where N denotes the total number of partitions; $pV_1(n)$ denotes an nth feature of the vertical projection curve of the target image in the current frame of image and $pV_2(n)$ denotes the nth feature of the vertical projection curve of the target image in the previous frame of image; and $pH_1(n)$ denotes an nth feature of the horizontal projection curve of the target image in the current frame of image and $pH_2(n)$ denotes the nth feature of the horizontal projection curve of the target image in the previous frame of image.

The nth feature of the vertical projection curve is calculated by dividing a cumulative value of the ordinate of an nth partition of the vertical projection curve being partitioned by the cumulative value of the ordinate of each partition of the vertical projection curve being partitioned. The nth feature of the horizontal projection curve is calculated by dividing the cumulative value of the ordinate of an nth partition of the horizontal projection curve being partitioned by the cumulative value of the ordinate of each partition of the horizontal projection curve being partitioned.

The present disclosure provides a computer-readable storage medium storing computer-executable instructions for executing the above target tracking method.

Compared with the related art, embodiments of the present disclosure have the following advantageous effects.

In embodiments of the present disclosure, a calculation speed of the vertical and horizontal projection curves is greatly improved by the vertical and horizontal projection integral images, and calculation complexity of the vertical and horizontal projection curves is reduced. Therefore, embodiments of the present disclosure provide a guarantee for real-time performance of a system.

Optional solutions provided by embodiments of the present disclosure solve the drifting problem occurred in the case that there exists colors or textures similar to a target to be tracked near the tracked target and the traditional particle filtering framework uses the color and texture features. As can be seen from a comparison between the adopted scalable projection curve features and color and texture features commonly used in the particle filtering framework, these solutions improve the accuracy of tracking in the case that the target and the background have similar colors or textures.

Optional solutions provided by embodiments of the present disclosure adopt a scalable curve similarity calculation method to overcome a problem that traditional projection curve features fail to handle target scaling and to allow the projection curve features to be used in scenarios with target scaling.

Optional solutions provided by embodiments of the present disclosure maximize the accuracy of target tracking while satisfying the real-time performance of the system by adaptively adjusting the total number N of partitions of the scalable projection curves in conjunction with the real-time performance of the system.

Other aspects can be understood after the accompanying drawings and detailed description are read and understood.

## BRIEF DESCRIPTION OF DRAWINGS

FIG. 1 is a flowchart of a target tracking method according to embodiments of the present disclosure;

FIG. 2 is a block diagram of a target tracking device according to embodiments of the present disclosure;

FIG. 3 is a target tracking flowchart according to an example of embodiments of the present disclosure;

FIG. 4a illustrates H component images in HSV space of two target images with frames being successfully matched according to an example of embodiments of the present disclosure;

FIG. 4b illustrates S component images in the HSV space of two target images with frames being successfully matched according to an example of embodiments of the present disclosure;

FIG. 4c illustrates V component images in the HSV space of two target images with frames being successfully matched according to an example of embodiments of the present disclosure;

FIG. 5a illustrates statistical histograms of H component images of two target images according to an example of embodiments of the present disclosure;

FIG. 5b illustrates statistical histograms of S component images of two target images according to an example of embodiments of the present disclosure;

FIG. 5c illustrates statistical histograms of V component images of two target images according to an example of embodiments of the present disclosure;

FIG. 6a illustrates vertical projection curves of two target images according to an example of embodiments of the present disclosure;

FIG. 6b illustrates partition ratio curves of vertical projection curves of two target images according to an example of embodiments of the present disclosure;

FIG. 7a illustrates horizontal projection curves of two target images according to an example of embodiments of the present disclosure; and

FIG. 7b illustrates partition ratio curves of horizontal projection curves of two target images according to an example of embodiments of the present disclosure.

## DETAILED DESCRIPTION

It should be noted that embodiments of the present disclosure and features thereof may be combined with each other without conflict.

Embodiments of the present disclosure will be described in detail with reference to the accompanying drawings.

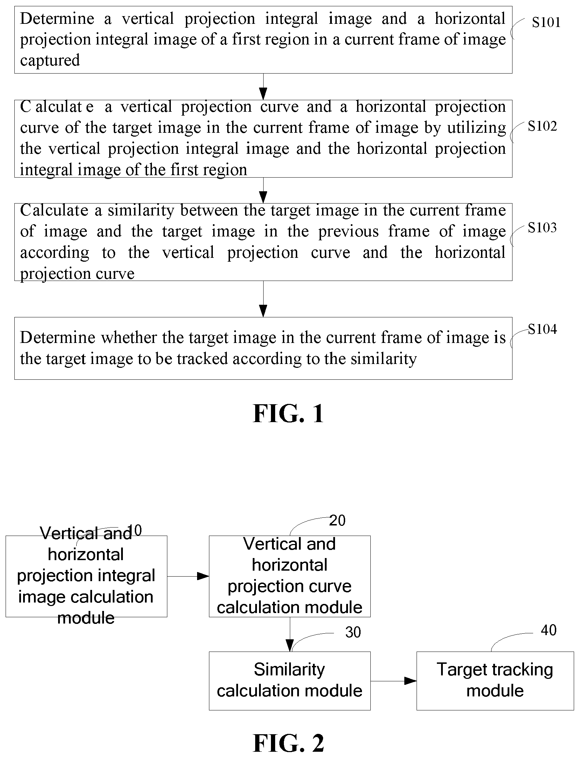

FIG. 1 is a flowchart of a target tracking method according to embodiments of the present disclosure. As illustrated in FIG. 1, the target tracking method includes steps S101~S104.

In step S101, a vertical projection integral image and a horizontal projection integral image of a first region in a current frame of image captured are determined. The first region refers to a region around a target image in a previous frame of image, i.e., a region obtained through expanding a circumscribed rectangle of the target image in the previous frame of image by a predetermined ratio (for example, but is not limited to, 30%). For example, after the target image is determined in the previous frame of image, a circumscribed rectangle of the target image is expanded to obtain a larger rectangular region containing the circumscribed rectangle. In the current frame of image, the vertical projection integral image and the horizontal projection integral image are only determined for the larger rectangular region.

For video images captured by a camera or other optical systems, a video sequence is converted into a plurality of frames of image in time sequence, and preprocessing such as noise reduction is performed. Optionally, it is first determined whether the current frame of image captured is the first frame of image. In the case that the current frame of image is the first frame of image, no previous frame of image exists for the current frame of image. In this case, the vertical projection integral image and the horizontal projection integral image of the target image (or a circumscribed rectangular region of the target image or a region obtained through expanding the circumscribed rectangular region by a predetermined ratio) in the first frame of image are calculated directly according to the current frame of image (i.e., the first frame of image). A vertical projection curve and a horizontal projection curve of the target image in the first frame of image are calculated according to the vertical projection integral image and the horizontal projection integral image of the target image in the first frame of image, so that a similarity between the target image in the subsequent second frame image and the target image in the first frame of image is calculated according to the vertical projection curve and the horizontal projection curve of the target image in the first frame of image. In the case that the current frame of image is not the first frame of image, a previous frame of image exists for the current frame of image. In this case, the vertical projection integral image and the horizontal projection integral image of a region around the target image of the previous frame of image (i.e. the first region) in the current frame of image are determined.

Optionally, the vertical projection integral image and the horizontal projection integral image of the first region in the current frame of image are determined as follows.

For any pixel in the vertical projection integral image of the first region, if the pixel is located in a first row in the vertical projection integral image, it is determined that a pixel value of the pixel is the pixel value of the pixel in the current frame of image; if the pixel is not located in the first row, it is determined that the pixel value of the pixel is the pixel value of the pixel in the current frame of image plus the pixel value of another pixel in a same column and a previous row in the vertical projection integral image.

For any pixel in the horizontal projection integral image of the first region, if the pixel is located in a first column in the horizontal projection integral image, it is determined that the pixel value of the pixel is the pixel value of the pixel in the current frame of image; if the pixel is not located in the first column, it is determined that the pixel value of the pixel is the pixel value of the pixel in the current frame of image plus the pixel value of another pixel in a same row and a previous column in the horizontal projection integral image.

The position and coordinates of the target in the first frame of image have been determined according to a target image template during a system detection process. Embodiments of the present disclosure are mainly intended to quickly and accurately track the target in subsequent frames after the target is determined in the first frame. Therefore, the first frame does not belong to the content of the target tracking described in embodiments of the present disclosure and will not be described herein.

In step S102, a vertical projection curve and a horizontal projection curve of the target image in the current frame of image are calculated according to the vertical projection integral image and the horizontal projection integral image of the first region.

Optionally, step S102 includes steps described below.

For the vertical projection curve of the target image in the current frame of image, it is determined that an ordinate of the vertical projection curve is a difference between a pixel value of a last row and the pixel value of a first row of a target region to be matched in the vertical projection integral image; and for the horizontal projection curve of the target image in the current frame of image, it is determined that an ordinate of the horizontal projection curve is a difference between the pixel value of a last column and the pixel value of a first column of a target region to be matched in the horizontal projection integral image.

In step S103, a similarity between the target image in the current frame of image and the target image in the previous frame of image is calculated according to the vertical projection curve and the horizontal projection curve.

Optionally, step S103 includes steps described below.

A total number of partitions of the vertical projection curve and the horizontal projection curve is adjusted according to a frame rate of a plurality of frames of images processed in real time. The similarity between the target image in the current frame of image and the target image in the previous frame of image is calculated according to the vertical projection curve, the horizontal projection curve and the total number of partitions.

Optionally, the total number of partitions of the vertical projection curve and the horizontal projection curve is adjusted in the following manner according to the frame rate of the plurality of frames of images processed in real time:

performing statistics on the frame rate of the plurality of frames of images processed in real time; comparing the statistical frame rate with a first preset frame rate and a second preset frame rate; and reducing the total number of partitions if the frame rate is less than the first preset frame rate and increasing the total number of partitions if the frame rate is greater than the second preset frame rate, where the first preset frame rate is less than the second preset frame rate.

If the frame rate is greater than or equal to the first preset frame rate and less than or equal to the second preset frame rate, the total number of partitions is unchanged.

Optionally, before the total number of partitions of the vertical projection curve and the horizontal projection curve is adjusted according to the frame rate of the plurality of frames of images processed in real time, the method further includes the following step: the total number of partitions is not adjusted if the number of frames of images processed in real time is less than a preset number of frames (e.g., 10 frames).

Optionally, the similarity between the target image in the current frame of image and the target image in the previous frame of image is calculated in the following manner according to the vertical projection curve, the horizontal projection curve and the total number of partitions.

The vertical projection curve and the horizontal projection curve of the target image in the current frame of image are partitioned according to the total number of partitions of the vertical projection curve and the horizontal projection curve. The target image in the current frame of image and the target image in the previous frame of image are matched with each other according to a result obtained from the partitioning; and a particle similarity between the target image in the current frame of image and the target image in the previous frame of image is calculated according to a formula below:

$$\text{Similarity} = \sum_{n=1}^{N} |pV_1(n) - pV_2(n)| + \sum_{n=1}^{N} |pH_1(n) - pH_2(n)|$$

where N denotes the total number of partitions; $pV_1(n)$ denotes an nth feature of the vertical projection curve of the target image in the current frame of image and $pV_2(n)$ denotes the nth feature of the vertical projection curve of the target image in the previous frame of image; and $pH_1(n)$ denotes an nth feature of the horizontal projection curve of the target image in the current frame of image and $pH_2(n)$ denotes the nth feature of the horizontal projection curve of the target image in the previous frame of image.

The nth feature of the vertical projection curve is calculated by dividing a cumulative value of the ordinate of the nth partition of the vertical projection curve being partitioned by the cumulative value of the ordinate of each partition of the vertical projection curve being partitioned. The nth feature of the horizontal projection curve is calculated by dividing the cumulative value of the ordinate of the nth partition of the horizontal projection curve being partitioned by the cumulative value of the ordinate of each partition of the horizontal projection curve being partitioned.

In step S104, it is determined whether the target image in the current frame of image is the target image to be tracked according to the similarity, so that video target tracking is performed.

Optionally, after the similarity is calculated, the target is tracked through particle filtering, and a tracking result is saved, i.e., coordinates and image of the target are saved.

FIG. 2 is a block diagram of a target tracking device according to embodiments of the present disclosure. As illustrated in FIG. 2, the target tracking device includes a vertical and horizontal projection integral image calculation module 10, a vertical and horizontal projection curve calculation module 20, a similarity calculation module 30 and a target tracking module 40.

1. Vertical and horizontal projection integral image calculation module 10

The vertical and horizontal projection integral image calculation module 10 is configured to determine a vertical projection integral image and a horizontal projection integral image of a first region in a current frame of image captured. The first region refers to a region around a target image in a previous frame of image, i.e., a region obtained through expanding a circumscribed rectangle of the target image by a predetermined ratio (for example, but is not limited to, 30%).

That is, the vertical and horizontal projection integral image calculation module 10 is mainly configured to prepare for calculation of the vertical projection curve and the horizontal projection curve, and can reduce time complexity in calculation of the two projection curves from O (2*m*n) to O (m+n).

Optionally, the vertical projection integral image and the horizontal projection integral image provided by embodiments of the present disclosure are different from a traditional integral image, and a pixel value of each pixel of the vertical projection integral image provided by embodiments of the present disclosure is calculated using the following formula:

$$\text{IntegralV}(i, j) = \text{IntegralV}(i-1, j) + \text{pixel}(i, j) \qquad (1)$$

If i=1, i.e., the pixel is located in a first row in the vertical projection integral image, then IntegralV(i-1, j) does not exist and IntegralV(i, j) = pixel(i, j).

A pixel value of each pixel of the horizontal projection integral image is calculated using the following formula:

$$\text{IntegralH}(i, j) = \text{IntegralH}(i, j-1) + \text{pixel}(i, j) \qquad (2)$$

If j=l, i.e., the pixel is located in a first column in the horizontal projection integral image, then IntegralH(i, j-1) does not exist and IntegralH(i, j) = pixel(i, j).

In formula (1), IntegralV denotes the vertical projection integral image, and IntegralV(i, j) denotes the pixel value of a pixel(i, j) in the vertical projection integral image. In formula (2), IntegralH denotes the horizontal projection integral image, and IntegralH(i, j) denotes the pixel value of a pixel(i, j) in the horizontal projection integral image. In formula (1) and formula (2), "pixel" denotes the pixel value of the pixel in the current frame of image, i denotes an abscissa of the pixel, and j denotes an ordinate of the pixel.

As can be seen from formulas (1) and (2), to calculate a vertical projection integral image and a horizontal projection integral image of an image, it only needs to traverse the image twice. Moreover, the calculation is locally performed in the region (i.e. the first region) around a position of the target image in the previous frame of image rather than in a whole image.

If there exists no previous frame of image, the vertical projection integral image and the horizontal projection integral image of the target image (or a circumscribed rectangular region of the target image or a region obtained through expanding the circumscribed rectangular region by a predetermined ratio) in the current frame of image are calculated according to the current frame of image.

2. Vertical and horizontal projection curve calculation module 20

The vertical and horizontal projection curve calculation module 20 is configured to calculate a vertical projection curve and a horizontal projection curve of the target image in the current frame of image by utilizing the vertical projection integral image and the horizontal projection integral image of the first region. That is, the vertical and horizontal projection curve calculation module 20 is configured to mainly calculate the vertical projection curve and the horizontal projection curve by utilizing the vertical projection integral image and the horizontal projection integral image without traversing every pixel of the image.

Optionally, by utilizing the vertical projection integral image and the horizontal projection integral image of the first region, the vertical and horizontal projection curve calculation module 20 calculates the vertical projection curve and the horizontal projection curve of the target image in the current frame of image in a manner described below.

An abscissa of the vertical projection curve is determined as a column where the pixel is located in the vertical projection integral image. An ordinate projV(j) of the vertical projection curve is a sum of pixel value of this column of a target region to be matched in a target template image, i.e., a difference between the pixel value of in a last row (e.g., row i1, column j) and the pixel value of in a first row (e.g., row i2, column j) of the target region to be matched in the vertical projection integral image. The ordinate projV(j) of the vertical projection curve is calculated using the following formula:

$$projV(j) = IntegralV(i1, j) - IntegralV(i2, j) \qquad (3)$$

An abscissa of the horizontal projection curve is determined as a row where the pixel is located in the horizontal projection integral image. An ordinate projH(i) of the horizontal projection curve is determined as a sum of pixel value of this row of the target region to be matched in the target template image, i.e., a difference between the pixel value of a last column (e.g., row i, column j 1) and the pixel value of a first column (e.g., row i, column j2) of the target region to be matched in the horizontal projection integral image. The ordinate projH(i) of the horizontal projection curve is calculated using the following formula:

$$projH(i) = IntegralH(i, j1) - IntegralH(i, j2) \qquad (4)$$

Optionally, if there exists no previous frame of image for the current frame of image, the vertical projection curve and the horizontal projection curve of the target image in the current frame of image are calculated according to the vertical projection integral image and the horizontal projection integral image of the target image in the current frame of image, so that the similarity is subsequently calculated according to the vertical projection curve and the horizontal projection curve of the target image in the current frame of image.

3. Similarity calculation module 30

The similarity calculation module 30 is configured to calculate the similarity between the target image in the current frame of image and the target image in the previous frame of image according to the vertical projection curve and the horizontal projection curve of the target image in the current frame of image.

Optionally, the similarity calculation module 30 includes: a complexity adaptive calculation submodule and a feature matching submodule.

The complexity adaptive calculation submodule is configured to adjust a total number of partitions of the vertical projection curve and the horizontal projection curve according to a frame rate of a plurality of frames of images processed in real time. That is, the complexity adaptive calculation submodule mainly is configured to dynamically adjust the total number of partitions of the projection curves according to the frame rate of processing by a system in real time.

The feature matching submodule is configured to calculate the similarity between the target image in the current frame of image and the target image in the previous frame of image according to the vertical projection curve, the horizontal projection curve and the total number of partitions. That is, the feature matching submodule is mainly configured to calculate the similarity between the projection curves of the two target images.

According to a traditional method for calculating a similarity between projection curves, a difference of the two curves is calculated for each point of the two curves. However, such method is inapplicable to a scaled target image. Therefore, the embodiment of the present disclosure provides a scaling-resistant method for calculating a similarity between scalable projection curves. In the scaling-resistant method, a process of comparing curves is regarded as a process similar to the integral calculation of a discrete function. The projection curve is divided into equal N partitions (N denotes the total number of partitions) according to an actual situation. A proportion of a cumulative value of the ordinate of each partition of the projection curve being partitioned to a cumulative value of the ordinate of the whole projection curve being partitioned is calculated. If the target image is scaled up or down, although the ordinate value of the projection curve of the target image will change, a proportion between corresponding parts will not change. Accuracy of this algorithm is related to the value of N. When the two images are not scaled up or down and the value of N is the number of pixels, this algorithm degrades to a general projection curve matching algorithm and has an accuracy equivalent to that of the general projection curve matching algorithm. A smaller value of N brings a lower accuracy, and therefore, the value of N needs to be increased as far as possible while real-time performance of a system is satisfied. The similarity is calculated using the following formula:

$$Similarity = \sum_{n=1}^{N} |p1(n) - p2(n)| \qquad (5)$$

In formula (5), p1(n) denotes a cumulative value of the nth projection curve of the target image in the current frame of image and p2(n) denotes a cumulative value of the nth projection curve of the target image in the previous frame of image.

Optionally, the similarity is determined using the following formulas:

$$pV(n) = \frac{projV(n)}{\sum_{k=1}^{N} projV(k)} \qquad (6)$$

$$pH(n) = \frac{projH(n)}{\sum_{k=1}^{N} projH(k)} \qquad (7)$$

$$Similarity = \sum_{n=1}^{N} |pV_1(n) - pV_2(n)| + \sum_{n=1}^{N} |pH_1(n) - pH_2(n)| \qquad (8)$$

where pV(n) denotes an nth feature of the vertical projection curve, i.e., a feature of an nth scalable vertical projection curve; pH(n) denotes an nth feature of the horizontal projection curve, i.e., a feature of an nth scalable horizontal projection curve; projV and projH are described above regarding the vertical and horizontal projection curve calculation module. According to formula (6), the nth feature of the vertical projection curve is calculated by dividing a cumulative value of the ordinate of an nth partition of the vertical projection curve being partitioned by the cumulative value of the ordinate of each partition of the vertical projection curve being partitioned. The ordinate projV is calculated using formula (3). According to formula (7), the nth feature of the horizontal projection curve is calculated by dividing the cumulative value of the ordinate of an nth partition of the horizontal projection curve being partitioned by the cumulative value of the ordinate of each partition of the horizontal projection curve being partitioned. The ordinate projH is calculated using formula (4).

As can be seen from formula (8), the similarity is actually a sum of a vertical feature similarity and a horizontal feature similarity. In formula (8), N denotes the total number of partitions; $pV_1(n)$ denotes an nth feature of the vertical projection curve of the target image in the current frame of image and $pV_2(n)$ denotes the nth feature of the vertical projection curve of the target image in the previous frame of image, and are both calculated using formula (6); $pH_1(n)$ denotes an nth feature of the horizontal projection curve of the target image in the current frame of image and $pH_2(n)$ denotes the nth feature of the horizontal projection curve of the target image in the previous frame of image, and are both calculated using formula (7).

4. Target tracking module 40

The target tracking module 40 is configured to determine whether the target image in the current frame of image is the target image to be tracked according to the similarity, so that video target tracking is performed. Optionally, the target tracking module 40 tracks the target through the above-mentioned scalable projection curve features based on the traditional particle filtering tracking framework, i.e., uses the scalable projection curve features to perform particle filtering processing and determine the tracked target.

Optionally, the target tracking device further includes: an image acquisition module configured to acquire images in real time; and a preprocessing module configured to perform noise reduction operations on the acquired images.

Used in the field of target tracking and aimed at a situation where a moving target is translated and scaled up or down, the embodiment of the present disclosure greatly reduces projection curve calculation complexity, allows greyscale projection curve features to be used in the particle filtering framework for performing real-time tracking, and provides an improved method for calculating a similarity between scalable projection curves to handle target scaling.

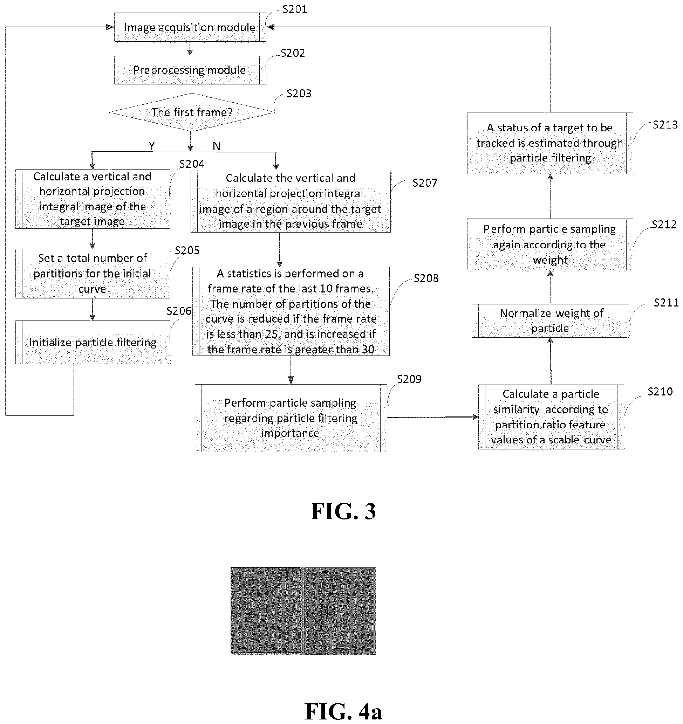

FIG. 3 is a target tracking flowchart according to an example of embodiments of the present disclosure. As illustrated in FIG. 3, the target tracking includes steps S201-S213.

In step S201, an image is acquired by the image acquisition module.

In step S202, the image is filtered by the preprocessing module to reduce the influence of the noise.

In step S203, it is determined whether the current frame of image is the first frame of image. If the current frame of image is the first frame of image, the process goes to step S204; otherwise, the process goes to step S207.

In step S204, a vertical projection integral image and a horizontal projection integral image of the target image (i.e., the target image in the first frame of image) are calculated.

In step S205, a total number N of partitions is set for the initial curve without considering scaling, and a width and a height of the target image are directly used for the settings. Then, the process goes to step S206.

In step S206, particle filtering is initialized, and position coordinates (herein, initial position coordinates) of a previous frame, position coordinates (herein, initial position coordinates) of the current frame, width and height, scaling, etc. are set. Then, the process goes to step S201.

In step S207, the vertical projection integral image and the horizontal projection integral image of a first region are calculated according to the above-mentioned formulas for calculating the vertical projection integral image and horizontal projection integral image.

In step S208, if the number of frames being processed is less than 10, the number of partitions of the curve is not adjusted and the process goes to step S209; otherwise, a statistics is performed on a frame rate of the last 10 frames. The number of partitions of the curve is reduced if the frame rate is less than 25, and is increased if the frame rate is greater than 30. Then, the process goes to step S209.

In step S209, particle sampling regarding particle filtering importance is performed.

In step S210, a particle similarity is calculated according to partition ratio feature values of the curve described by the feature matching submodule.

In step S211, weight of particle is normalized.

In step S212, particle sampling is performed again according to the weight.

In step S213, a status of a target to be tracked is estimated through particle filtering, and then the process goes to step S201.

A particle refers to a small image area that may be the target image in the current frame of image. Each target is assigned with multiple particles. Each particle corresponds to a target area to be matched. The particle similarity is calculated for the particles according to the above formula (8). According to a situation that each similarity corresponds to a different weight, a final position of the target to be tracked is determined.

The target tracking method of this example is a real-time adaptive target tracking method based on features of scalable projection curves and particle filtering. The method uses features of scalable projection curves rather than traditional color or texture features to perform matching in the particle filtering framework, and can handle similar colors or textures near the target. Vertical and horizontal projection integral images are calculated before projection curves are calculated. Then, each time the projection curves are calculated, time complexity is reduced from O (2*m*n) to O (m+n), so that the method can be applied to a real-time system. The adaptive scalable curve similarity calculation formula (8) used in this example can timely evaluate the real-time performance of the system processing and instantly change corresponding parameters to ensure the overall real-time performance of the system. The calculation process draws on the idea of discrete function integral calculation, making the improved projection curve features applicable to target scaling and greatly extending application scenarios of this algorithm.

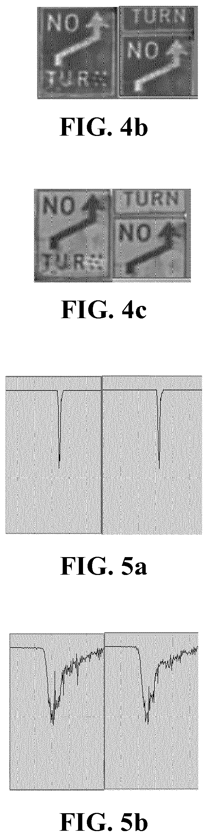

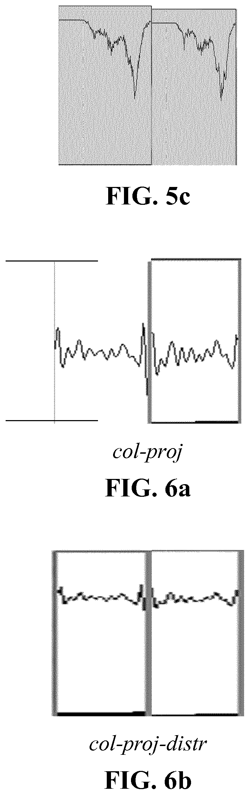

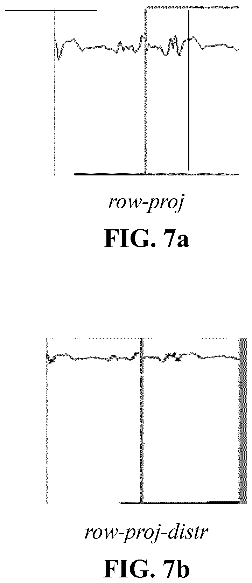

FIGs. 4a~7b illustrate an analysis of a calculated projection curve similarity based on a practical test performed according to the above example. In a scenario where the target and the background have similar colors and textures, color histogram features and corresponding projection curve features are calculated separately, and reasons for possible incorrect matching and advantages of using the projection curve features are analyzed. FIGS. 4a~4c illustrate H-img, S-img and V-img, i.e., H, S and V component images, respectively, in HSV space of two target images for which the frame of images are successfully matched. FIGS. 5a~5c illustrate statistical histograms of the H component images, the S component images and the V component images, respectively. It is clear that the statistical histograms of the three components in the HSV color space of the two images are almost the same, and therefore, incorrect matching is bound to occur when color features are used to perform tracking. FIG. 6a and FIG. 6b illustrate vertical projection curves and partition ratio curves of the vertical projection curves, respectively. FIG. 7a and FIG. 7b illustrate horizontal projection curves and partition ratio curves of the horizontal projection curves, respectively. It can be seen from the figures that a similarity between the vertical projection curves of the two images is high and a similarity between the partition ratio curves of the vertical projection curves of the two images is high. This is because in this scenario, a target same as a billboard to be tracked is just above the billboard to be tracked, and a matching result of this frame amounts to moving a piece below the target vertically to the top of the target. This case will not occur if no billboard same as the billboard to be tracked exists above the billboard to be tracked. Even if the vertical projection curve features fail to reflect differences between the two images due to particularity of the scenario, it can be seen from FIG. 7a and FIG. 7b that significant differences exist between horizontal projection curves of the two images and between partition ratio curves of the horizontal projection curves of the two target images, and the two targets can be distinguished from each other, thus avoiding incorrect matching.

Another embodiment of the present disclosure provides a computer-readable storage medium storing computer-executable instructions for executing the above-mentioned target tracking method.

**INDUSTRIAL APPLICABILITY**

In embodiments of the present disclosure, a calculation speed of the vertical and horizontal projection curves is greatly improved by the vertical and horizontal projection integral images, and calculation complexity of the vertical and horizontal projection curves is reduced. Therefore, embodiments of the present disclosure provide a guarantee for real-time performance of a system.

**Claims**

1. A target tracking method, comprising:

   determining a vertical projection integral image and a horizontal projection integral image of a first region in a current frame of image captured, wherein the first region refers to a region obtained through expanding a circumscribed rectangle of a target image in a previous frame of image by a predetermined ratio;
   calculating a vertical projection curve and a horizontal projection curve of the target image in the current frame of image by utilizing the vertical projection integral image and the horizontal projection integral image of the first region;
   calculating a similarity between the target image in the current frame of image and the target image in the previous frame of image according to the vertical projection curve and the horizontal projection curve; and
   determining whether the target image in the current frame of image is the target image to be tracked according to the similarity.

2. The method according to claim 1, wherein the determining a vertical projection integral image and a horizontal projection integral image of a first region in a current frame of image comprises:

   for any pixel in the vertical projection integral image of the first region, if the pixel is located in a first row in the vertical projection integral image, determining that a pixel value of the pixel is the pixel value of the pixel in the current frame of image; if the pixel is not located in the first row, determining that the pixel value of the pixel is the pixel value of the pixel in the current frame of image plus the pixel value of another pixel in a same column and a previous row in the vertical projection integral image; and
   for any pixel in the horizontal projection integral image of the first region, if the pixel is located in a first column in the horizontal projection integral image, determining that the pixel value of the pixel is the pixel value of the pixel in the current frame of image; if the pixel is not located in the first column, determining that the pixel value of the pixel is the pixel value of the pixel in the current frame of image plus the pixel value of another pixel in a same row and a previous column in the horizontal projection integral image.

3. The method according to claim 1 or 2, further comprising:

calculating the vertical projection integral image and the horizontal projection integral image of the target image in the current frame of image according to the current frame of image if there exists no previous frame of image; and

calculating the vertical projection curve and the horizontal projection curve of the target image in the current frame of image by utilizing the vertical projection integral image and the horizontal projection integral image of the target image in the current frame of image.

4. The method according to claim 1, wherein the calculating a vertical projection curve and a horizontal projection curve of the target image in the current frame of image by utilizing the vertical projection integral image and the horizontal projection integral image of the first region comprises:

for the vertical projection curve of the target image in the current frame of image, determining that an ordinate of the vertical projection curve is a difference between the pixel value of a last row and the pixel value of a first row of a target region to be matched in the vertical projection integral image; and

for the horizontal projection curve of the target image in the current frame of image, determining that an ordinate of the horizontal projection curve is a difference between the pixel value of a last column and the pixel value of a first column the target region to be matched in the horizontal projection integral image.

5. The method according to claim 1, wherein the calculating a similarity between the target image in the current frame of image and the target image in the previous frame of image according to the vertical projection curve and the horizontal projection curve comprises:

adjusting a total number of partitions of the vertical projection curve and the horizontal projection curve according to a frame rate of a plurality of frames of images being processed in real time; and

calculating the similarity between the target image in the current frame of image and the target image in the previous frame of image according to the vertical projection curve, the horizontal projection curve and the number of partitions.

6. The method according to claim 5, wherein the adjusting a total number of partitions of the vertical projection curve and the horizontal projection curve according to a frame rate of a plurality of frames of images being processed in real time comprises:

performing statistics on the frame rate of the plurality of frames of images being processed in real time;

comparing the frame rate with a first preset frame rate and a second preset frame rate;

reducing the total number of partitions if the frame rate is less than the first preset frame rate; and

increasing the total number of partitions if the frame rate is greater than the second preset frame rate, wherein the first preset frame rate is less than the second preset frame rate.

7. The method according to claim 6, wherein the method further comprises the followings before the adjusting a total number of partitions of the vertical projection curve and the horizontal projection curve according to a frame rate of a plurality of frames of images being processed in real time:

not adjusting the total number of partitions if a total number of frames of the images processed in real time is less than a preset number of frames.

8. (Original) The method according to claim 5, wherein the calculating the similarity between the target image in the current frame of image and the target image in the previous frame of image according to the vertical projection curve, the horizontal projection curve and the total number of partitions comprises:

partitioning the vertical projection curve and the horizontal projection curve of the current frame of image according to the total number of partitions of the vertical projection curve and the horizontal projection curve; and

matching the target image in the current frame of image with the target image in the previous frame of image according to a result of partitioning, and calculating a particle similarity between the target image in the current frame of image and the target image in the previous frame of image according to a formula below:

$$\text{Similarity} = \sum_{n=1}^{N} |pV_1(n) - pV_2(n)| + \sum_{n=1}^{N} |pH_1(n) - pH_2(n)|$$

wherein N denotes the total number of partitions; $pV_1(n)$ denotes an nth feature of the vertical projection curve of the target image in the current frame of image and $pV_2(n)$ denotes an nth feature of the vertical projection curve of the target image in the previous frame of image; and $pH_1(n)$ denotes an nth feature of the horizontal projection curve of the target image in the current frame of image and $pH_2(n)$ denotes an nth feature of the horizontal projection curve of the target image in the previous frame of image,

wherein the nth feature of the vertical projection curve is calculated by dividing a cumulative value of the ordinate of an nth partition of the vertical projection curve being partitioned by the cumulative value of the ordinate of each partition of the vertical projection curve being partitioned; and the nth feature of the horizontal projection curve is calculated by dividing the cumulative value of the ordinate of an nth partition of the horizontal projection curve being partitioned by the cumulative value of the ordinate of each partition of the horizontal projection curve being partitioned.

9.  An adaptive target tracking device, comprising:

    a vertical and horizontal projection integral image calculation module configured to determine a vertical projection integral image and a horizontal projection integral image of a first region in a current frame of image captured;
    a vertical and horizontal projection curve calculation module configured to calculate a vertical projection curve and a horizontal projection curve of a target image in the current frame of image by utilizing the vertical projection integral image and the horizontal projection integral image of the first region;
    a similarity calculation module configured to calculate a similarity between the target image in the current frame of image and the target image in a previous frame of image according to the vertical projection curve and the horizontal projection curve; and
    a target tracking module configured to determine whether the target image in the current frame of image is the target image to be tracked according to the similarity.

10. The target tracking device according to claim 9, wherein the vertical and horizontal projection integral image calculation module is configured to determine the vertical projection integral image and the horizontal projection integral image of the first region in the current frame of image as follows:

    for any pixel in the vertical projection integral image of the first region, if the pixel is located in a first row in the vertical projection integral image, determining that a pixel value of the pixel is the pixel value of the pixel in the current frame of image; if the pixel is not located in the first row, determining that the pixel value of the pixel is the pixel value of the pixel in the current frame of image plus the pixel value of another pixel in a same column and a previous row in the vertical projection integral image; and
    for any pixel in the horizontal projection integral image of the first region, if the pixel is located in a first column in the horizontal projection integral image, determining that the pixel value of the pixel is the pixel value of the pixel in the current frame of image; if the pixel is not located in the first column, determining that the pixel value of the pixel is the pixel value of the pixel in the current frame of image plus the pixel value of another pixel in a same row and a previous column in the horizontal projection integral image.

11. The target tracking device according to claim 9, wherein the vertical and horizontal projection curve calculation module is configured to calculate, by utilizing the vertical projection integral image and the horizontal projection integral image of the first region, the vertical projection curve and the horizontal projection curve of the target image in the current frame of image as follows:

    for the vertical projection curve of the target image in the current frame of image, determining that an ordinate of the vertical projection curve is a difference between a pixel value of a last row and a pixel value of a first row of a target region to be matched in the vertical projection integral image; and
    for the horizontal projection curve of the target image in the current frame of image, determining that the ordinate of the horizontal projection curve is a difference between a pixel value of a last column and a pixel value of a first column a target region to be matched in the horizontal projection integral image.

12. The target tracking device according to claim 9, wherein the similarity calculation module comprises:

    a complexity adaptive calculation submodule configured to adjust a total number of partitions of the vertical projection curve and the horizontal projection curve according to a frame rate of a plurality of frames of images being processed in real time; and
    a curve feature matching submodule configured to calculate the similarity between the target image in the current frame of image and the target image in the previous frame of image according to the vertical projection curve, the horizontal projection curve and the total number of partitions.

13. The target tracking device according to claim 12, wherein the complexity adaptive calculation submodule is configured to adjust the total number of partitions of the vertical projection curve and the horizontal projection curve according to the frame rate of the plurality of frames of images being processed in real time as follows:

performing statistics on the frame rate of the plurality of frames of images being processed in real time; comparing the frame rate with a first preset frame rate and a second preset frame rate; and reducing the total number of partitions if the frame rate is less than the first preset frame rate and increasing the total number of partitions if the frame rate is greater than the second preset frame rate,
wherein the first preset frame rate is less than the second preset frame rate.

14. The target tracking device according to claim 12, wherein the curve feature matching submodule is configured to calculate the similarity between the target image in the current frame of image and the target image in the previous frame of image according to the vertical projection curve, the horizontal projection curve and the total number of partitions as follows:

partitioning the vertical projection curve and the horizontal projection curve of the current frame of image according to the total number of partitions of the vertical projection curve and the horizontal projection curve; matching the target image in the current frame of image and the target image in the previous frame according to a result of the partitioning; and calculating a particle similarity between the target image in the current frame of image and the target image in the previous frame according to a formula below:

$$\text{Similarity} = \sum_{n=1}^{N} |pV_1(n) - pV_2(n)| + \sum_{n=1}^{N} |pH_1(n) - pH_2(n)|$$

wherein N denotes the total number of partitions; $pV_1(n)$ denotes an nth feature of the vertical projection curve of the target image in the current frame of image and $pV_2(n)$ denotes the nth feature of the vertical projection curve of the target image in the previous frame of image; and $pH_1(n)$ denotes an nth feature of the horizontal projection curve of the target image in the current frame of image and $pH_2(n)$ denotes the nth feature of the horizontal projection curve of the target image in the previous frame of image,
wherein the nth feature of the vertical projection curve is calculated by dividing a cumulative value of the ordinate of an nth partition of the vertical projection curve being partitioned by the cumulative value of the ordinate of each partition of the vertical projection curve being partitioned; and the nth feature of the horizontal projection curve is calculated by dividing the cumulative value of the ordinate of an nth partition of the horizontal projection curve being partitioned by the cumulative value of the ordinate of each partition of the horizontal projection curve being partitioned.

Determine a vertical projection integral image and a horizontal projection integral image of a first region in a current frame of image captured ⌐ S101

Calculate a vertical projection curve and a horizontal projection curve of the target image in the current frame of image by utilizing the vertical projection integral image and the horizontal projection integral image of the first region ⌐ S102

Calculate a similarity between the target image in the current frame of image and the target image in the previous frame of image according to the vertical projection curve and the horizontal projection curve ⌐ S103

Determine whether the target image in the current frame of image is the target image to be tracked according to the similarity ⌐ S104

## FIG. 1

Vertical and horizontal projection integral image calculation module ⌐ 10

Vertical and horizontal projection curve calculation module ⌐ 20

Similarity calculation module ⌐ 30

Target tracking module ⌐ 40

## FIG. 2

S201

Image acquisition module

S202

Preprocessing module

S203

The first frame?

Y    N

S204

Calculate a vertical and horizontal projection integral image of the target image

Calculate the vertical and horizontal projection integral image of a region around the target image in the previous frame

S207

S205

Set a total number of partitions for the initial curve

A statistics is performed on a frame rate of the last 10 frames. The number of partitions of the curve is reduced if the frame rate is less than 25, and is increased if the frame rate is greater than 30

S208

S206

Initialize particle filtering

Perform particle sampling regarding particle filtering importance

S209

Calculate a particle similarity according to partition ratio feature values of a scable curve

S210

A status of a target to be tracked is estimated through particle filtering

S213

Perform particle sampling again according to the weight

S212

Normalize weight of particle

S211

**FIG. 3**

**FIG. 4a**

FIG. 4b

FIG. 4c

FIG. 5a

FIG. 5b

**FIG. 5c**

*col-proj*

**FIG. 6a**

*col-proj-distr*

**FIG. 6b**

*row-proj*

**FIG. 7a**

*row-proj-distr*

**FIG. 7b**

# INTERNATIONAL SEARCH REPORT

| | International application No. |
| --- | --- |
| | PCT/CN2016/075670 |

## A. CLASSIFICATION OF SUBJECT MATTER

G06T 7/20 (2006.01) i

According to International Patent Classification (IPC) or to both national classification and IPC

## B. FIELDS SEARCHED

Minimum documentation searched (classification system followed by classification symbols)

G06T; H04N; G06K

Documentation searched other than minimum documentation to the extent that such documents are included in the fields searched

Electronic data base consulted during the international search (name of data base and, where practicable, search terms used)

CNPAT; WPI; EPODOC; GOOGLE; CNKI; IEEE: track, video, sequence, projection, integral, match, similarity

## C. DOCUMENTS CONSIDERED TO BE RELEVANT

| Category* | Citation of document, with indication, where appropriate, of the relevant passages | Relevant to claim No. |
| --- | --- | --- |
| A | CN 103620621 A (NOKIA CORPORATION), 05 March 2014 (05.03.2014), description, paragraphs [0038]-[0049] | 1-14 |
| A | CN 1223056 A (KONINKLIJKE PHILIPS ELECTRONICS N.V.), 14 July 1999 (14.07.1999), the whole document | 1-14 |
| A | CN 102750708 A (TIANJIN UNIVERSITY), 24 October 2012 (24.10.2012), the whole document | 1-14 |
| A | US 6404900 B1 (SHARP LABORATORIES OF AMERICA, INC.), 11 June 2002 (11.06.2002), the whole document | 1-14 |
| A | GINES, G.M.; "Refining Face Tracking with Integral Projections", AVBPA 2003, 31 December 2003 (31.12.2003), pages 360-368 | 1-14 |

☐ Further documents are listed in the continuation of Box C. ☒ See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| 18 April 2016 (18.04.2016) | **02 June 2016 (02.06.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Linlin** Telephone No.: (86-10) **62414069** |
| --- | --- |

Form PCT/ISA/210 (second sheet) (July 2009)

## INTERNATIONAL SEARCH REPORT
### Information on patent family members

International application No.

**PCT/CN2016/075670**

| Patent Documents referred in the Report | Publication Date | Patent Family | Publication Date |
|---|---|---|---|
| CN 103620621 A | 05 March 2014 | EP 2727047 A1 | 07 May 2014 |
| | | US 2013004025 A1 | 03 January 2013 |
| | | WO 2013001144 A1 | 03 January 2013 |
| | | TW 201310358 A | 01 March 2013 |
| | | US 8873811 B2 | 28 October 2014 |
| | | IN 201102228 I4 | 13 December 2013 |
| CN 1223056 A | 14 July 1999 | BR 9805971 A | 31 August 1999 |
| | | JP 2000513897 A | 17 October 2000 |
| | | US 6130964 A | 10 October 2000 |
| | | WO 9835501 A3 | 05 November 1998 |
| | | WO 9835501 A2 | 13 August 1998 |
| | | CN 1120629 C | 03 September 2003 |
| | | EP 0893028 A2 | 27 January 1999 |
| | | KR 20000064847 A | 06 November 2000 |
| | | KR 100609249 B | 30 November 2006 |
| CN 102750708 A | 24 October 2012 | CN 102750708 B | 15 October 2014 |
| US 6404900 B1 | 11 June 2002 | EP 0967574 B1 | 24 August 2011 |
| | | JP 4251719 B2 | 08 April 2009 |
| | | JP 2000036052 A | 02 February 2000 |
| | | EP 0967574 A3 | 14 March 2001 |
| | | EP 0967574 A2 | 29 December 1999 |

Form PCT/ISA/210 (patent family annex) (July 2009)